Europäisches Patentamt

European Patent Office

Office européen des brevets

(19)

(11) **EP 1 675 380 A1**

(12) **EUROPEAN PATENT APPLICATION**

(43) Date of publication:
**28.06.2006 Bulletin 2006/26**

(51) Int Cl.:
***H04N 1/60*** *(2006.01)*

(21) Application number: **05028058.5**

(22) Date of filing: **21.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.12.2004 KR 2004109800**

(71) Applicant: **Samsung Electronics Co., Ltd.**
**Suwon-si, Gyeonggi-Do (KR)**

(72) Inventor: **Park, Jung-Hoon**
**Suwon-si**
**Gyeonggi-do (KR)**

(74) Representative: **Lang, Johannes**
**Bardehle Pagenberg Dost Altenburg Geissler,**
**Postfach 86 06 20**
**81633 München (DE)**

(54) **Portable terminal supporting direct printing function**

(57)    A portable terminal is provided for supporting a direct printing function. The portable terminal can display a print preview image on its display unit, thereby making it possible to prevent an undesirable image from being printed due to a difference between color display methods of the mobile terminal and a printer.

FIG.5

**Description**

<u>**PRIORITY**</u>

This application claims the benefit under 35 U.S.C. § 119(a) of a Korean Patent Application entitled "Portable Terminals For Direct Printing Via Printer", filed in the Korean Intellectual Property Office on December 21, 2004, and assigned Serial No. 2004-109800, the entire contents of which are hereby incorporated by reference.

<u>**BACKGROUND OF THE INVENTION**</u>

<u>**Field of the Invention:**</u>

The present invention relates to a portable terminal for supporting a direct printing function. More particularly, the present invention relates to a portable terminal for supporting a direct printing function, which displays a print preview image on its display unit to identify a difference between an original image and a print preview image, so that a portable terminal user is able to determine whether to print the print preview image.

<u>**Background of the Prior Art:**</u>

Portable terminals, such as mobile terminals and personal digital assistant (PDA) have become popular. In addition to a basic call function and a scheduler function, the portable terminals provide a camera phone function, a satellite broadcast receiving function, and so on.

Taking a picture with a camera phone, displaying broadcasts and reproducing a stored image via the portable terminal have also become popular. Until now, a portable terminal camera produced image quality inferior to a general digital camera due to the portable terminal's camera's low resolution and small lens. Because of development of camera module manufacturing technology, an image signal processor (ISP) and an improved sensitivity of an image taking sensor, portable terminals having an image resolution of 2 Mega pixels or more are now popular. Also technology enables a user not only to take an image with a camera phone and then display or store the captured image therein, but also to print the stored image by using a photo printer. Moreover, recent digital cameras provide a direct printing function, which has been implemented by manufacturers who manufacture both a camera and a printer. The direct printing function enables a user to directly print an image by connecting the digital camera directly to a printer without using an interfacing personal computer.

Recently, a portable phone having a camera module with an image quality of 3.2 Mega pixels or more, for example, SPH-s2300, has been introduced. This camera module provides a resolution superior to that of a display unit of the portable phone, which supports an image resolution of about 0.26 Mega pixels. Also, a portable terminal supporting the direct printing function has also been introduced. Direct printing using a portable terminal is still in its infancy stage. However, according to a technology trends, a portable terminal having a built-in camera module is expected to replace a stand alone digital camera.

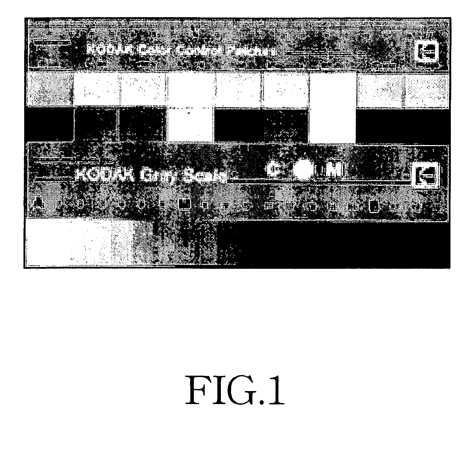

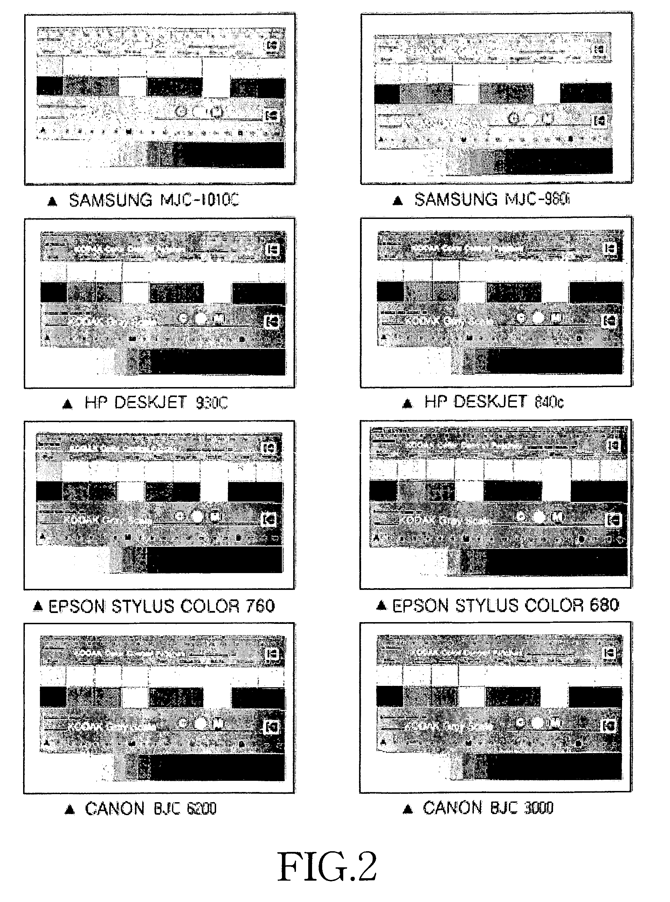

In the conventional direct printing function, an image stored in a digital camera is transferred to and then directly printed by a printer. The printers are different from one another in their components and in ink used therein. Accordingly, even the same stored image may be printed differently according to the type of printer and ink used. This problem will now be described with reference to FIGs. 1 and 2.

FIG 1 is a picture illustrating an original image displayed on a display unit of a portable terminal, and FIG. 2 illustrates printed pictures of the original image in FIG 1, which are printed by various printers. As can be seen from FIG. 2, even the same image may be printed differently according to the type of printer.

The display unit of the portable terminal uses a red, green and blue (RGB) color display mode. An image displayed through the RGB color display mode is obtained by mixing three colors, that is, red (R), green (G) and blue (B). Various colors can be created by adjusting the ratio of the mixed RGB colors. For example, the mixture of red and green in the ratio of 1:1 results in yellow. These RGB colors are called the "three primary light colors".

Meanwhile, three basic colors used for painting a picture are red (R), blue (B) and yellow (Y) which are called "three primary colors". The "Blue" of the three primary colors is similar to cyan and is thus called "cyan". Cyan is created by mixing blue and green. The "Red" of the three primary colors is similar to magenta and is thus called "magenta". Magenta is created by mixing red and blue. Consequently, three primary colors are actually used cyan (C), magenta (M), and yellow (Y).

That is, the three primary light colors are RGB colors, and the three primary colors are cyan, magenta and yellow (CMY) colors. The RGB colors are used for creating a color image in fields, such as television, monitors, stage illumination, and the like. The CMY colors are used for creating a color picture in fields, such as printing, painting, dyeing, and so on.

When illuminated, an object reflects a light of a specific wavelength and absorbs the remaining light, thereby exhibiting a color. For example, a red object absorbs all the wavelengths other than a red wavelength. Accordingly, a reflected light from the red object equals the subtraction of colors other than red from the illumination. This is called "subtractive light mixture". Therefore, the three primary colors of an object are colors that are respectively created by subtracting red (R), green (G), and blue (B) from white illumination. When two colors are mixed, the resulting color locates at a line connecting the two colors. When a color is subtracted from another, the resulting color locates at an opposite line. It can be easily seen that when red is subtracted from white, a color opposite to red results which is cyan. Similarly, the subtraction of green (G) from white results in magenta (M) and the subtraction of blue (B) from white results in yellow (Y). Accordingly, the CMY mode three primary colors are used for paint and dye used in the fields of printing and painting. These three colors constitute a color ink of a printer. Black can be created by properly mixing the CMY three primary colors. However, since a CMY color paint or ink is expensive, Black, represented by "K" is also used in printing. Thus, the colors become CMYK.

A color displayed on a computer monitor is different from the corresponding color actually printed because the former is an additive mixture color while the later is a subtractive mixture color.

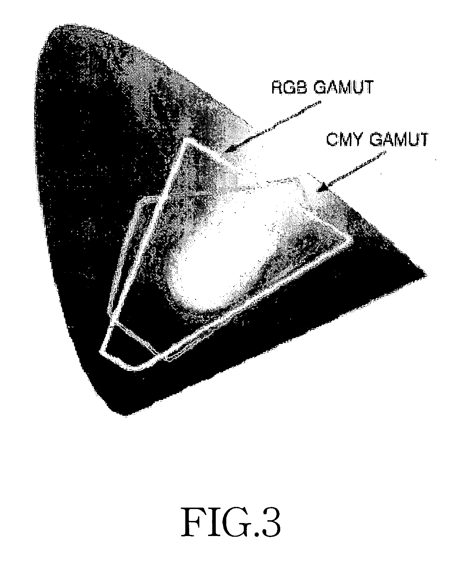

In order to solve the above problem, there is required a device-independent color reproduction method. For this, a RGB mixture amount of a display unit, which coincides with a stimulus at a human eye that is caused by a sunlight spectrum reflected by an object, must be found. However, the RGB mixture amount varies according to the type of display unit. Also, when the detected RGB mixture amount is changed into a CMYK amount through a simple equation and is then transferred to a printer, irreproducible colors occur due to a difference in a color space as shown in FIG. 3. Therefore, a method is requested for converting a RGB image into a CMYK image differently according to the types of printers.

That is, there may occur a case where a user prints an undesirable image due to a difference in color reproduction methods of the display unit of the mobile terminal and the printer. Accordingly, a method is requested for previewing a print image corresponding to an image displayed on the display unit, thereby preventing inaccurate color image printing.

## SUMMARY OF THE INVENTION

The present invention is to provide a portable terminal and an image device, which enables a user to preview a print image through a display unit thereof before a stored image therein is printed by a printer.

Also, the present invention provides a portable terminal and an image device for supporting a direct printing function, which enables a user to print only a desirable image by print previewing a print image through a display unit thereof before a stored image therein is printed by a printer.

Further, the present invention provides a portable terminal for supporting a direct printing function, which enables a user to print only a desirable image by previewing a print image through a display unit thereof before a stored image therein is printed by a printer.

Further, the present invention provides a method for displaying an image in the above terminal and device, which enable a user to print only a desirable image by previewing a print image through a display unit thereof before a stored image therein is printed by a printer.

According to an aspect of the present invention, a portable terminal for supporting a direct printing function comprises an input/output (I/O) interface unit connected to an I/O interface unit of a printer, a memory for prestoring a color table of the printer, a controller for converting a selected red, green and blue (RGB) original image into a cyan, magenta and yellow (CMY) original image when the I/O interface unit of the portable terminal is connected to an I/O interface unit of the printer and a print preview image display mode of the portable terminal is selected, mapping the CMY original image into a CMY print preview image by using the color table of the printer, and converting the CMY print preview image into a RGB print preview image, and a display unit for displaying the RGB print preview image.

According to another aspect of the present invention, a portable terminal for supporting a direct printing function comprises an I/O interface unit connected to an I/O interface unit of a printer, a memory for storing a color table of the printer, the color table being received through the I/O interface unit of the portable terminal when the I/O interface unit of the portable terminal is connected to an I/O interface unit of the printer and a print preview image display mode of the portable terminal is selected, a controller for converting a selected RGB original image into a CMY original image, mapping the CMY original image into a CMY print preview image by using the color table of the printer, and converting the CMY print preview image into a RGB print preview image, and a display unit for displaying the RGB print preview image.

According to a further another aspect of the present invention, a method for displaying an image in a portable terminal for supporting a direct printing function comprises the steps of prestoring a color table of a printer in a memory of the portable terminal, converting a selected RGB original image into a CMY original image when an I/O interface unit of the portable terminal is connected to an I/O interface unit of the printer and a print preview image display mode of the portable terminal is selected, mapping the CMY original image into a CMY print preview image by using the color table of the printer, converting the CMY print preview image into a RGB print preview image, and displaying the RGB print preview image on a display unit of the portable terminal.

According to a still further another aspect of the present invention, a method for displaying an image in a portable terminal for supporting a direct printing function comprises the steps of receiving a color table of a printer when an I/O interface unit of the portable terminal is connected to an I/O interface unit of the printer and a print preview image display mode of the portable terminal is selected, storing the color table of the printer in a memory of the portable terminal, converting a selected RGB original image into a CMY original image; mapping the CMY original image into a CMY print preview image by using the color table of the printer, converting the CMY print preview image into a RGB print preview image, and displaying the RGB print preview image on a display unit of the portable terminal.

## BRIEF DESCRIPTION OF THE DRAWINGS

The accompanying drawings, which are included to provide a further understanding of the invention and are incorporated in and constitute a part of this application, illustrate exemplary embodiments of the invention and together with the description serve to explain the principle of the invention. In the drawings:

FIG. 1 is a picture illustrating an original image displayed on a display unit of a portable terminal;

FIG. 2 illustrates pictures of the original image in FIG. 1 which are printed by various printers;

FIG 3 is a view comparing a red, green and blue (RGB) color region of a display unit of a portable terminal with a cyan, magenta and yellow (CMY) color region of a printer;

FIG. 4 is a block diagram illustrating a portable terminal directly connectable to a printer according to an exemplary embodiment of the present invention; and

FIG. 5 is a flowchart illustrating a process for displaying a printable image, which is to be printed by a printer, on a display unit of a portable terminal according to an exemplary embodiment of the present invention.

Throughout the drawings, like reference numerals will be understood to refer to like parts, components and structures.

## DETAILED DESCRIPTION OF EXEMPLARY EMBODIMENTS

Reference will now be made in detail to the exemplary embodiments of the present invention, examples of which are illustrated in the accompanying drawings. A detailed description of well-known features will be omitted for conciseness.

Although the exemplary embodiment of the present invention will be described with respect to a portable terminal supporting a direct printing function, it can also be applied to all types of image devices supporting the direct printing function.

An exemplary embodiment of the present invention provides a portable terminal supporting a direct printing function, which can display a print preview image on its display unit, thereby making it possible to prevent an undesirable image from being printed due to a difference between color display methods of the mobile terminal and a printer.

Hereinafter, a portable terminal, which is connected directly to a color ink printer to thus support a direct printing function, will be exemplarily described.

Currently, color printers are typically color ink printers. Laser printers perform a printing operation by subliming dye using a laser. A display unit of a portable terminal is developed to display an image in near natural color. Also, a color region of a printer is developed to have 255 gray scale levels per color and thus be able to reproduce near natural color. However, there still exists a great color difference due to a difference between color mixing methods of the display unit and the printer. Accordingly, there exists a color difference between an image displayed on the display unit and a printed image corresponding to the displayed image.

An exemplary embodiment of the present invention provides a method enabling a user to preview a print image corresponding to an image displayed on the display unit of the portable terminal prior to printing the displayed image.

In an exemplary embodiment of the present invention, data are transmitted between the portable terminal and the printer according to the conventional standard such as a Universal Serial Bus (USB) standard. In this case, the portable terminal acts as a host and the printer acts as a client. In the conventional USB environment, data cannot be transmitted from the client to the host. Accordingly, in order to implement a method of transmitting a color table, two-way communication must occur between the portable terminal and the printer. This occurs when the host and the client are interchangeably operated in the USB environment. This exemplary embodiment of the present invention may be practiced by using two methods. The first method is that the printer stores therein its color table and transmits the stored color table to the portable terminal when connected to the portable terminal. The second method is that the portable terminal prestores therein a color table of the printer and designates the stored color table through a search process when connected to the printer. The first method is advantageous in that any printer having a standardized color table can be directly connected to the portable terminal for the direct printing function, but is disadvantageous in that a large amount of data transmission is required. In contrast, the second method is advantageous in that only a small amount of data transmission is required because only the specific serial number of the printer needs to be transmitted to the portable terminal, but is disadvantageous in that a large memory capacity is required in the portable terminal and incompatibility may exist between the portable terminal and the printer. Accordingly, a method may be provided to solve the problems of the two methods. In the method, color tables of popular printers are prestored in a memory of the portable terminal and the remaining necessary color tables are transmitted from corresponding printers to the portable terminal.

The memory of the mobile terminal stores color tables to be used for conversion of a color region. A controller of the portable terminal performs a calculation for the color region conversion. A table mapping requires only a small amount of calculation and thus does not affect an overall system performance. The portable terminal is designed to have at least two image display modes such as an original image display mode and a print preview image display mode. The original image display mode is used for displaying an image in a computer or in an Internet homepage, and the print preview image display mode is used for the direct printing function. Further, the portable terminal is designed so that one of the two image display modes (that is, the original image display mode and the print preview image display mode) can be selected when the portable terminal is connected to a printer for the direct printing function.

An image is taken by a camera module of the portable terminal. In addition to the taken image, various images, such as a picture image received via e-mail and a prestored picture image, may be used in this embodiment. A near original image is first displayed on the display unit of the portable terminal in the original image display mode. Thereafter, when connected to a printer, the portable terminal checks the model name of the printer and then determines whether or not to receive a color table from the printer. That is, the portable terminal determines whether or not a color table corresponding to the model of the printer is prestored in its memory. When the corresponding color table is prestored, the portable terminal does not separately receive the color table of the printer. In contrast, when the corresponding color table is not prestored, the portable terminal separately receives the color table of the printer. When the color table is determined as described above, the portable terminal performs a color region mapping between the original image and the determined color table.

Since the color table of the printer is written in cyan, magenta and yellow (CMY) mode, the original image is converted into a CMY mode for a color table mapping. The prestored or received color table is constituted by CMY data. The red, green and blue (RGB)/CMY region is converted into the CMY/RGB region by Equation 1 below:

$$C = 255 - R, M = 255 - G, Y = 255 - B; R = 255 - C, G = 255 - M, B = 255 - Y \quad (1)$$

FIG. 3 is a view comparing a RGB color region of the display unit in the portable terminal with a CMY color region of the printer. As can be seen from FIG 3, the RGB color region is identical, for the most part, to the CMY color region, but is different, for some part, from the CMY region.

In the portable terminal, the original image is generally constituted by RGB color data. This RGB original image is converted into the CMY region through Equation 1. The CMY original image is mapped through the following method. Assuming that the CMY original image values are Cr, Mg, and Yb and values to be determined in the mapping table are Cc, Mm, and Yy, a mapping differentiation constant "MAP_Diff" can be determined by Equation 2 below:

$$MAP\_Diff = w1 \times (Cr-Cc)^2 + w2 \times (Mg-Mm)^2 + w3 \times (Yb-Yy)^2 \quad (2)$$

According to exemplary implementation of present invention, w1, w2 and w3 are weight values determinable through measurement. When a red color is printed thicker than the original image, w1 is set to be larger than w2 and w3. This is because the red color is the sum of magenta (M) and yellow (Y). That is, when the components M and Y of the red color is set to be smaller than cyan (C), the incorrect color region of the printer can be corrected. This value may vary according to the type of printers and the amount of ink used. That is, when the mapping is performed using the minimum MAP_Diff, data nearest to the original data can be obtained. Because the display unit is different from the printer in respect of a color determination method, it is important to determine the weight values through various experiments. After the most accurate colors are determined as described above, an image constituted by the determined colors is displayed on the display unit of the portable terminal.

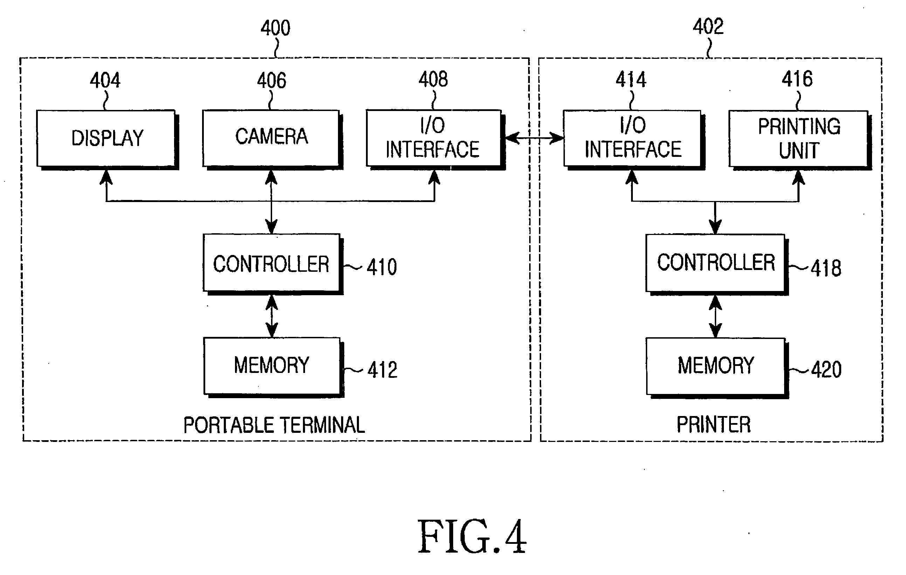

FIG. 4 is a block diagram of a portable terminal that is directly connectable to a printer for direct printing according to an exemplary embodiment of the present invention.

Referring to FIG. 4, a portable terminal 400 is directly connected to a printer 402. The portable terminal 400 comprises a display unit 404, a camera 406, an I/O interface 408, a controller 410, and a memory 412. The printer 402 comprises an I/O interface 414, a printing unit 416, a controller 418, and a memory 420.

The display unit 404 displays a desired image in an original mode or in a print preview mode.

The I/O interface 408 and the I/O interface 414 connect the portable terminal 400 and the printer 402 through two-way data communication.

The controller 410 controls an overall operation of the portable terminal 400. Specifically, the controller displays a print preview image by using a color table received from the printer or color tables stored in the memory 412.

The memory 412 of the portable terminal 400 stores color tables for most frequently and widely used printers.

The memory 418 stores a color table suitably set to a characteristic of the printer 402.

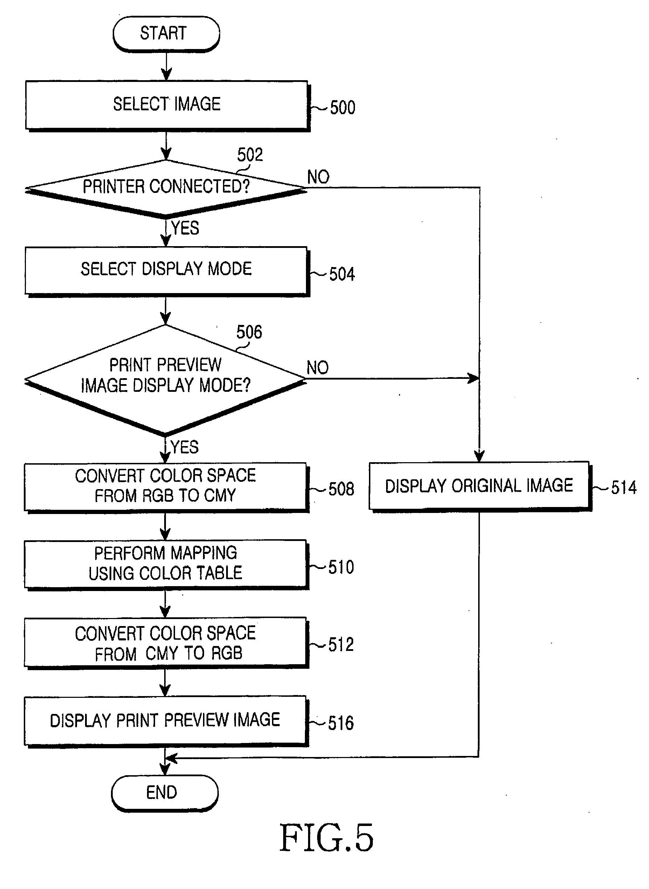

FIG. 5 is a flowchart illustrating a process for displaying a print preview image, which is to be printed by a printer, on a display unit of a portable terminal according to an exemplary embodiment of the present invention.

Hereinafter, an original image expressed in RGB mode will be referred to as a RGB original image, and an original image expressed in CMY mode will be referred to as a CMY original image. Also, a print preview image into which the RGB original image is to be actually printed by a printer will be referred to as a RGB print preview image, and a print preview image into which the CMY original image is to be actually printed by the printer will be referred to as a CMY print preview image.

Referring to FIGs. 4 and 5, a user selects a desired original image in Step 500. In Step 502, the controller 410 checks whether the portable terminal 400 is connected to the printer 402. If so, the process proceeds to Step 504, and if not, the process proceeds to Step 514. In Step 514, the portable terminal 400 displays the selected original image on the display unit 404 and then ends the process. In Step 504, the user selects one of image display modes, such as an original image display mode and a print preview image display mode.

In Step 504, the controller 410 determines which of the original image display mode and the print preview image display mode is selected in step 506. If the original image display mode is selected, the process proceeds to Step 514, and if the print preview image display mode is selected, the process proceeds to Step 508. In Step 508, the controller 410 converts a RGB original image into a CMY original image.

In Step 510, the controller 410 maps the CMY original image into a print preview image by using the color table received from the memory 412 or 420, thereby obtaining a CMY print preview image. In Step 512, the controller 410 converts the CMY print preview image into a RGB print preview image. In Step 516, the controller 410 displays the RGB print preview image on the display unit 404 and then ends the process.

As described above, in the exemplary embodiments of the present invention, the print preview color image can be displayed in advance on the display unit of the portable terminal or an image device. Accordingly, the user can see a difference between a preview color image displayed on the display unit and a corresponding color image printed by the printer, and thus can print only desirable images without printing undesirable images.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

**Claims**

1.   A portable terminal comprising:

an I/O interface unit for connecting to a printer;
a memory for prestoring a color table of the printer;
a controller for converting a red, green and blue (RGB) original image into a cyan, magenta and yellow (CMY) original image when the I/O interface of the portable terminal is connected to the printer and a print preview image display mode of the portable terminal is selected, mapping the CMY original image into a CMY print preview image by using the color table of the printer, and converting the CMY print preview image into a RGB print preview image; and
a display unit for displaying the RGB print preview image.

2.   The portable terminal of claim 1, wherein the RGB original image is converted into the CMY original image by using an equation comprising:

$$C = 255 - R, M = 255 - G, Y = 255 - B$$

wherein, C refers to cyan, R refers to red, M refers to magenta, G refers to green, Y refers to yellow, and B refers to blue.

3. The portable terminal of claim 1, wherein the I/O interface unit of the portable terminal comprises a two-way Universal Serial Bus (USB).

4. The portable terminal of claim 1, wherein the CMY original image is mapped into the CMY print preview image by using an equation comprising:

$$\mathrm{MAP\_Diff} = w1 \; x \; (Cr - Cc)^2 + w2 \; x \; (Mg - Mm)^2 + w3 \; x \; (Yb - Yy)^2.$$

5. The portable terminal of claim 1, wherein the CMY print preview image is converted into the RGB print preview image by using an equation comprising:

$$R = 255 - C, G = 255 - M, B = 255 - Y$$

wherein, R refers to red, C refers to cyan, G refers to green, M refers to magenta, B refers to blue, and Y refers to yellow.

6. A portable terminal comprising:

an I/O interface unit for connecting to an I/O interface unit of a printer;
a memory for storing a color table of the printer, the color table being received through the I/O interface unit of the portable terminal when the I/O interface unit of the portable terminal is connected to the I/O interface unit of the printer and a print preview image display mode of the portable terminal is selected;
a controller for converting a red, green and blue (RGB) original image into a cyan, magenta and yellow (CMY) original image, mapping the CMY original image into a CMY print preview image by using the color table of the printer, and converting the CMY print preview image into a RGB print preview image; and
a display unit for displaying the RGB print preview image.

7. The portable terminal of claim 6, wherein the RGB original image is converted into the CMY original image by using an equation comprising:

$$C = 255 - R, M = 255 - G, Y = 255 - B$$

wherein, C refers to cyan, R refers to red, M refers to magenta, G refers to green, Y refers to yellow, and B refers to blue.

8. The portable terminal of claim 6, wherein the I/O interface unit of the portable terminal comprises a two-way Universal Serial Bus (USB).

9. The portable terminal of claim 6, wherein the CMY original image is mapped into the CMY print preview image by using an equation comprising:

$$[\mathrm{MAP\_Diff} = w1 \; x \; (Cr - Cc)^2 + w2 \; x \; (Mg - Mm)^2 + w3 \; x \; (Yb - Yy)^2.$$

10. The portable terminal of claim 6, wherein the CMY print preview image is converted into the RGB print preview image by using an equation comprising:

$$R = 255 - C, G = 255 - M, B = 255 - Y$$

wherein, R refers to red, C refers to cyan, G refers to green, M refers to magenta, B refers to blue, and Y refers to yellow.

**11.** A method for displaying an image in a portable terminal supporting a direct printing function, the method comprising the steps of:

prestoring a color table of a printer in a memory of a portable terminal;
converting a red, green and blue (RGB) original image into a cyan, magenta and yellow (CMY) original image when an I/O interface unit of the portable terminal is connected to an I/O interface unit of the printer and a print preview image display mode of the portable terminal is selected;
mapping the CMY original image into a CMY print preview image by using the color table of the printer;
converting the CMY print preview image into a RGB print preview image; and
displaying the RGB print preview image on a display unit of the portable terminal.

**12.** The method of claim 11, wherein the converting of the RGB original image into the CMY original image comprises an equation comprising:

$$C = 255 - R, M = 255 - G, Y = 255 - B$$

wherein, C refers to cyan, R refers to red, M refers to magenta, G refers to green, Y refers to yellow, and B refers to blue.

**13.** The method of claim 11, wherein the I/O interface unit of the portable terminal comprises a two-way Universal Serial Bus (USB).

**14.** The method of claim 11, wherein mapping of the CMY original image into the CMY print preview image comprises using an equation comprising:

$$MAP\_Diff = w1 \ x \ (Cr - Cc)^2 + w2 \ x \ (Mg - Mm)^2 + w3 \ x \ (Yb - Yy)^2.$$

**15.** The method of claim 11, wherein converting of the CMY print preview image into the RGB print preview image comprises using an equation comprising:

$$R = 255 - C, G = 255 - M, B = 255 - Y$$

wherein, R refers to red, C refers to cyan, G refers to green, M refers to magenta, B refers to blue, and Y refers to yellow.

**16.** A method for displaying an image in a portable terminal supporting a direct printing function, the method comprising the steps of:

receiving a color table of a printer when an I/O interface unit of a portable terminal is connected to an I/O interface unit of a printer and a print preview image display mode of the portable terminal is selected;
storing the color table of the printer in a memory of the portable terminal;
converting a red, green and blue (RGB) original image into a cyan, magenta and yellow (CMY) original image;
mapping the CMY original image into a CMY print preview image by using the color table of the printer;
converting the CMY print preview image into a RGB print preview image; and
displaying the RGB print preview image on a display unit of the portable terminal.

**17.** The method of claim 16, wherein converting of the RGB original image into the CMY original image comprises using an equation comprising;

$$C = 255 - R, M = 255 - G, Y = 255 - B$$

wherein, C refers to cyan, R refers to red, M refers to magenta, G refers to green, Y refers to yellow, and B refers to blue.

18. The method of claim 16, wherein the I/O interface unit of the portable terminal comprises a two-way Universal Serial Bus (USB).

19. The method of claim 16, wherein mapping of the CMY original image into the CMY print preview image comprises using an equation comprising:

$$MAP\_Diff = w1 \times (Cr - Cc)^2 + w2 \times (Mg - Mm)^2 + w3 \times (Yb - Yy)^2.$$

20. The method of claim 16, wherein converting of the CMY print preview image into the RGB print preview image comprises using an equation comprising:

$$R = 255 - C, G = 255 - M, B = 255 - Y$$

wherein, R refers to red, C refers to cyan, G refers to green, M refers to magenta, B refers to blue, and Y refers to yellow.

21. An image displaying device comprising:

    an I/O interface unit for connecting to an I/O interface unit of a printer;
    a memory for storing a color table of the printer;
    a controller for converting a selected red, green and blue (RGB) original image into a cyan, magenta and yellow (CMY) original image when the I/O interface unit of the image device is connected to the interface unit of the printer and a print preview image display mode of the image device is selected, mapping the CMY original image into a CMY print preview image by using the color table of the printer, and converting the CMY print preview image into a RGB print preview image; and
    a display unit for displaying the RGB print preview image.

22. An image displaying device comprising:

    an I/O interface unit for connecting to an I/O interface unit of a printer;
    a memory for storing a color table of the printer, the color table being received through the I/O interface unit of the portable terminal when the I/O interface unit of the portable terminal is connected to the I/O interface unit of the printer and a print preview image display mode of the portable terminal is selected;
    a controller for converting a selected red, green and blue (RGB) original image into a cyan, magenta and yellow (CMY) original image when the I/O interface unit of the image device is connected to the interface unit of the printer and a print preview image display mode of the image device is selected, mapping the CMY original image into a CMY print preview image by using the color table of the printer, and converting the CMY print preview image into a RGB print preview image; and
    a display unit for displaying the RGB print preview image.

FIG.1

▲ SAMSUNG MJC-1010C

▲ SAMSUNG MJC-980

▲ HP DESKJET 930C

▲ HP DESKJET 840c

▲ EPSON STYLUS COLOR 760

▲ EPSON STYLUS COLOR 680

▲ CANON BJC 6200

▲ CANON BJC 3000

# FIG.2

RGB GAMUT

CMY GAMUT

FIG.3

EP 1 675 380 A1

400

402

| 404 | 406 | 408 | | 414 | 416 |

DISPLAY  CAMERA  I/O INTERFACE ↔ I/O INTERFACE  PRINTING UNIT

CONTROLLER ~410

CONTROLLER ~418

MEMORY ~412

MEMORY ~420

PORTABLE TERMINAL

PRINTER

FIG.4

START

SELECT IMAGE ~500

PRINTER CONNECTED? 502 —NO

↓ YES

SELECT DISPLAY MODE ~504

PRINT PREVIEW IMAGE DISPLAY MODE? 506 —NO

↓ YES

CONVERT COLOR SPACE FROM RGB TO CMY ~508

DISPLAY ORIGINAL IMAGE ~514

PERFORM MAPPING USING COLOR TABLE ~510

CONVERT COLOR SPACE FROM CMY TO RGB ~512

DISPLAY PRINT PREVIEW IMAGE ~516

END

## FIG.5

**European Patent Office**

## EUROPEAN SEARCH REPORT

Application Number

EP 05 02 8058

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 627 950 A (STOKES ET AL) 6 May 1997 (1997-05-06) * abstract * * figures 2,3 * * column 3, line 49 - column 8, line 46 * ----- | 1-22 | H04N1/60 |
| X | EP 1 294 177 A (CANON KABUSHIKI KAISHA) 19 March 2003 (2003-03-19) * abstract * * paragraphs [0063] - [0074] * * figure 12 * ----- | 1-22 | |
| X | US 2003/202194 A1 (TORIGOE MAKOTO ET AL) 30 October 2003 (2003-10-30) * paragraphs [0082] - [0098] * * figures 5,6 * ----- | 1-22 | |
| A | US 2003/234942 A1 (JERAN PAUL L) 25 December 2003 (2003-12-25) * paragraphs [0015] - [0044] * * figures 1,2 * ----- | 6-10, 16-20,22 | TECHNICAL FIELDS SEARCHED (IPC) |
| A | WO 03/040933 A (COLORGRAPHYX; SPRONK, CONERNELIS, ADRIANUS, M) 15 May 2003 (2003-05-15) * the whole document * ----- | 1-22 | H04N |

The present search report has been drawn up for all claims

| Place of search | Date of completion of the search | Examiner |
|---|---|---|
| The Hague | 6 March 2006 | Doutté, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 02 8058

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2006

| Patent document cited in search report | | Publication date | Patent family member(s) | | Publication date |
|---|---|---|---|---|---|
| US 5627950 | A | 06-05-1997 | AU<br>WO | 3554595 A<br>9608918 A1 | 29-03-1996<br>21-03-1996 |
| EP 1294177 | A | 19-03-2003 | JP<br>US | 2003087591 A<br>2003053094 A1 | 20-03-2003<br>20-03-2003 |
| US 2003202194 | A1 | 30-10-2003 | NONE | | |
| US 2003234942 | A1 | 25-12-2003 | DE | 10324379 A1 | 04-03-2004 |
| WO 03040933 | A | 15-05-2003 | NONE | | |

EPO FORM P0459

For more details about this annex : see Official Journal of the European Patent Office, No. 12/82